# EUROPÄISCHE PATENTSCHRIFT

(11) **EP 2 281 789 B1**
(45) Veröffentlichungstag und Bekanntmachung des Hinweises auf die Patenterteilung: **14.09.2016**
(21) Anmeldenummer: 10166771.5
(22) Anmeldetag: 22.06.2010
(51) Int. Cl.: C04B 35/04, C04B 35/486, C23C 24/08

(54) **Schlickerformulierung zur Herstellung von thermischen Schutzschichten**
Slurry Formation for the Production of Thermal Barrier Coatings
Formule de barbotine pour la fabrication de couches de protection thermiques

(30) Priorität: 30.06.2009 CH 10142009
(43) Veröffentlichungstag der Anmeldung: 09.02.2011
(73) Patentinhaber: General Electric Technology GmbH, 5400 Baden (CH)
(72) Erfinder: Nienburg, Hans-Christoph, 69121 Heidelberg (DE); Eroglu, Adnan, 5417 Untersiggenthal (CH); Hähnle, Hartmut, 79790 Küssaberg (DE)
(74) Vertreter: Bernotti, Andrea

(56) Entgegenhaltungen:
- EP-A- 0 396 240
- EP-A- 1 471 043
- EP-A- 1 739 204
- US-A- 4 871 694
- US-A1- 2007 134 408

## Beschreibung

### TECHNISCHES GEBIET

Die vorliegende Erfindung betrifft eine verbesserte Schlickerformulierung (Keramiksuspension), welche zur Herstellung einer thermischen Schutzschicht eingesetzt werden kann, ein Verfahren zur Herstellung einer solchen Schlickerformulierung sowie ein Verfahren zur Herstellung einer thermischen Schutzschicht unter Verwendung einer solchen Schlickerformulierung.

### STAND DER TECHNIK

Für die Bauweise von Gasturbinenbrennkammern gibt es mehrere verschiedene Ansätze. Einer davon ist die Verwendung von Ringbrennkammern, auf die sich die vorliegende Erfindung unter anderem bezieht. Dies sind ringförmige Brennkammern, die zwischen Verdichter und Turbine im wesentlichen rotationssymmetrisch um den Rotor der Gasturbine angeordnet sind. Über normalerweise eine Vielzahl von Brennern wird ein brennbares Gasgemisch in die Ringbrennkammer eingeleitet, das in dieser verbrennt und als ringförmiger Strom in die Turbine strömt. Der im wesentlichen ringförmige Raum wird nach innen, dass heisst zur Rotorseite durch eine sogenannte Innenschale oder inneren Brennerummantelung und nach aussen durch eine sogenannte Aussenschale oder äußere Brennerummantelung begrenzt. Diese Schalen bestehen häufig aus mehreren einzelnen Abschnitten, die verschweisst oder mechanisch miteinander verbunden sind und dabei die Baueinheit einer Gasturbine bilden. Die einzelnen Abschnitte können dabei, wie aus der EP 1662201 bekannt, doppelwandig ausgestaltet sein, so dass zwischen den im wesentlichen parallel verlaufenden Wänden ein Kühlluftstrom geführt werden kann.

Zum Schützen der inneren und äusseren Brennerummantelung vor den hohen Temperaturen, die innerhalb der Brennkammer erzeugt werden, ist allgemein bekannt, die der Hitze ausgesetzten inneren Flächen mit einer thermischen Schutzschicht (thermal barrier coating/TBC) zu beschichten, wie zum Beispiel mit Yttriumoxid partiell stabilisiertes Zirkonoxid (YSZ), die einem Temperaturschock bis zu 1150 °C und einer Materialermüdung widersteht. Die YSZ-Schicht kann durch Plasmaspritzen oder durch Abscheidung aus der Dampfphase mittels Elektronenstrahl aufgebracht werden. Obwohl diese TBCs jederzeit verfügbar sind, können diese, wie aus der DE 10 2007 001 835 bekannt, wenn gängige Materialien als Ausgangsmaterials verwendet werden, nicht auf eine Schweissnaht aufgetragen werden. Die Lebensdauer der Schweissverbindung zwischen den Abschnitten der Brennerummantelung ist daher ausserordentlich begrenzt.

Aufgrund der hohen Temperaturen und der Wärmeentwicklung in der Brennkammer sind die Schalen hohen thermischen Belastungen ausgesetzt. Um trotz der hohen Wärmebelastung eine ausreichende Lebensdauer sicher zu stellen, sind Ringbrennkammern mit verschiedenen Kühlmethoden entwickelt worden, die ausserdem meist mit Wärmeschutzschichten oder Schutzschildern kombiniert werden.

So beschreibt beispielsweise die bereits genannte DE 10 2007 001 835 eine Brennkammer-Ummantelung, bei welcher die Außenschale aus zwei Halbschalen gebildet wird, welche an einer Verbindungslinie miteinander verschweißt werden, und bei welcher die Innenschale aus zwei Halbschalen gebildet wird, welche ebenfalls an einer Verbindungslinie miteinander verschweißt werden. Um einen Schutz der Schweissnaht gewährleisten zu können, verfügen die Halbschalen jeweils bei der Verbindungslinie über einen von der heißen Seite abgewandten Verbindungsflansch, welcher zur Verbindung der Halbschalen mit der Schweissnaht dient. Zusätzlich wird auf der Heissgasseite dieser Schweissnaht und abgesetzt von dieser ein Hitzeschild angeordnet, welches die Schweissnaht vor den hohen Temperaturen schützt.

Aus der WO 2009/040286 ist eine ähnliche Konstruktion einer Brennkammer bekannt. Zum Schutz der Schweissnaht wird hier eine Filmkühlung vorgeschlagen, die gezielt entlang der Schweissnaht geführt wird, indem im Bereich der Schweissnaht eine von der heißen Seite wegweisende Einbuchtung vorgesehen ist.

Das Dokument US 4,871,694 beschreibt ein Verfahren zur Erzeugung eines zellulares keramischen Materials, bei dem etwa 0.5 bis 12 Gewichtsanteile mindestens eines Alkalimetall-Chlorids,-Bromids, -Jodids oder -Nitrats zu 10 Teilen einer etwa 10-40 % igen (in Gewichts-%) wässrigen Lösung von Natrium-oder Kaliumsilikat hinzugegeben wird, um durch eine Polymerisationsreaktion ein Gel zu erzielen. In einem Ausführungsbeispiel wird die Hochtemperaturkeramik gebildet durch ein erstes Vermischen von einem Teil Si₂O und 5 Teilen MgO mit 10 Teilen einer kommerziellen Natriumsilikatlösung. Dann wird in einem zweiten Schritt ein Teil Kaliumnitrat dazugemischt, um die Mischung zu polymerisieren, wobei ein sehr festes Gel entsteht.

### DARSTELLUNG DER ERFINDUNG

Die vorliegende Erfindung betrifft eine verbesserte Schlickerformulierung (Keramiksuspension), welche zur Herstellung einer thermischen Schutzschicht eingesetzt werden kann. Dies insbesondere ohne Verwendung einer separaten zusätzlichen Verbindungsschicht (bond coat) und auch auf besonders schwierigen Materialien, wie beispielsweise auf einer Schweissnaht, welche nicht sandgestrahlt wurde.

Insbesondere betrifft die vorliegende Erfindung eine Schlickerformulierung für die Herstellung eines Patches oder eines Streifens aus einer thermischen Schutzschicht mit einem keramischen Binder, keramischen Füllstoffen und gegebenenfalls weiteren Additiven, wobei die Schlickerformulierung
20-60 Trocken-Gewichtsprozent Alkalisilikat-Binder;
40-80 Trocken-Gewichtsprozent keramische Füllstoffe ausgewählt aus der Gruppe: Yttriumoxid stabilisiertes Zirkonoxid, Magnesiumoxid, oder Mischungen davon;
0-20 Trocken-Gewichtsprozent Additive ausgewählt aus der Gruppe: Aluminiumphosphate, Microsilica, Metakaolin,) aufweist, wobei sich die Trocken-Gewichtsanteile aller Bestandteile auf 100 % ergänzen;
sowie ein Lösungsmittel respektive Suspensionsmittel,

Die prinzipielle Haftung einer Schutzschicht unter Verwendung einer solchen Schlickerformulierung auf dem Substrat wird neben der genaueren Oberflächenbeschaffenheit in erster Linie durch den keramischen Binder vorgegeben.

Typischerweise wird als Lösungsmittel respektive Suspensionsmittel Wasser verwendet. Generell wird bevorzugt, wenn die Schlickerformulierung eine Viskosität im Bereich von 50-5000 mPas aufweist, vorzugsweise von 500-1500 mPas. Vorzugsweise wird eine solche Viskosität eingestellt, indem der Anteil an Wasser (oder allgemeiner Lösungsmittel) entsprechend eingestellt wird kurz bevor die Schlickerformulierung aufgetragen wird und während respektive nachdem die Mischung erneut aufgemischt wurde.

Als Additive kommen Aluminiumphosphate, Microsilica oder Metakaolin in Frage. Diese Additive können die Aushärtung und Entwässerung der Schicht beschleunigen.

Als keramische Binder sind für die vorgesehene Anwendung (Nickelbasislegierungen als Grundwerkstoff) besonders Alkalisilikate mit relativ hohem Alkalioxidanteil (Modul 2-3) geeignet. Es können auch Mischungen verschiedener Alkalisilikate eingesetzt werden.

Durch die hohe Alkalikonzentration kommt es zu einer Anätzung der Metalloberfläche und es können sich zumindest partiell chemische Bindungen ausbilden.

Entsprechend zeichnet sich gemäß einer bevorzugten Ausführungsform der Erfindung die Schlickerformulierung dadurch aus, dass es sich beim keramischen Binder um ein Alkalisilikat handelt oder eine Mischung von Alkalisilikaten, vorzugsweise mit einem Modul im Bereich von 1.8-3.5, wobei es sich vorzugsweise um Natriumsilikat und/oder Kaliumsilikat und/oder Lithiumsilikat mit einem Modul im Bereich von 2-2.5 handelt.

Mit anderen Worten wird vorzugsweise ein System der allgemeinen Formel M₂SiₓO₂ₓ₊₁ y H₂O eingesetzt, in der M ein Alkalimetallion, x, das sogenannte Modul, eine Zahl von 1,8 bis 3.5 und y normalerweise eine Zahl von 0 bis 20 ist und bevorzugte Werte für x im Bereich von 2-2.5 sind.

Die Temperaturwechselbeständigkeit kann im wesentlichen durch die Füllstoffe beeinflusst werden. Dabei sollte der thermische Ausdehnungskoeffizient (CTE) des Füllstoffs möglichst nahe an demjenigen des Grundwerkstoffs liegen. Außerdem sollte der Füllstoff eine möglichst niedrige thermische Leitfähigkeit besitzen, damit eine möglichst gute thermische Abschirmung gewährleistet wird.

Von den zur Verfügung stehenden keramischen Füllstoffen sind besonders Yttriumoxid stabilisiertes Zirconoxid und Magnesiumoxid geeignet, da deren thermische Ausdehnungskoeffizienten am besten mit dem von Inconel übereinstimmen.

| | |
|---|---|
| Yttriumoxid stabilisiertes Zirconoxid | : CTE=10-12,5 (10E-6/K) |
| Magnesiumoxid | : CTE=11-13,5 (10E-6/K) |
| Inconel | : CTE=14 (10E-6/K) |

Vorzugsweise verfügen also die Füllstoffe über einen Wärmeausdehnungskoeffizienten bei Raumtemperatur im Bereich von 10 (10E-6/K) - 15 (10E-6/K), besonders bevorzugt im Bereich von 12 (10E-6/K) - 14 (10E-6/K). Generell können entsprechend auch noch andere Materialien in typischerweise geringen Anteilen im Rahmen der Füllstoffe vorhanden sein, solange sie den Wärmeausdehnungskoeffizienten der entstehenden Schicht nicht aus diesem Bereich verschieben.

Entscheidend für die Stabilität der Suspension und ihr Haftvermögen auf dem Substrat ist auch die mittlere Korngröße der Füllstoffe. Mit sub-µm-Pulvern (d50=0,01-1,00 µm) können über mehrere Tage stabile Suspensionen hergestellt werden, die auch nach längerer Lagerung wieder leicht redispergiert werden können. Beim Auftragen der Beschichtung findet keine Sedimentation des Füllstoffs auf die Substratoberfläche statt.

Gemäß einer weiteren bevorzugten Ausführungsform ist die Schlickerformulierung dadurch gekennzeichnet, dass die keramischen Füllstoffe eine mittlere Korngröße (d50) im Bereich von 0.01-1 µm aufweisen.

Eine solche Suspension erlaubt die Reparatur auch in Bereichen beispielsweise einer Schweissnaht, wenn bevorzugtermassen die Substratoberfläche (Ni-Basislegierung) angeschliffen wird, so dass eine angeraute und metallisch reine Oberfläche entsteht, wenn, wie bevorzugt, Alkalisilikate (Li, Na, K) mit relativ hohem Alkalioxidanteil (Modul 2-3.5) eingesetzt werden (dadurch kommt es zum Anätzen der Metalloberfläche und es können sich chemische Bindungen ausbilden), Füllstoffe wie ZrO2 und MgO mit einem thermischen Ausdehnungskoeffizient in der Nähe der Ni-Basislegierung eingesetzt werden und die Korngröße der Füllstoffe im sub-µ-Bereich ausgewählt wird und Dispergierung mit z.B. Ultraschall erfolgt. Dadurch werden feine, stabile Suspensionen erzeugt, die eine gute Haftung auf dem Substrat gewährleisten.

Zur Suspensionsherstellung wird der keramische Füllstoff (35-60 Gew.% bezogen auf die wässrige Suspension) bevorzugtermassen mit einer wässrigen Lösung des Binders gemischt und mit Hilfe eines Ultra-Turrax oder von Ultraschall dispergiert. Über die Menge des Füllstoffs kann die Viskosität der Suspension so eingestellt werden, dass sie durch Streichen oder Spritzen optimal verarbeitet werden kann. Die sorgfältige Dispergierung des Füllstoffs gewährleistet eine gute Deagglomeration der Pulverteilchen und die Ausbildung einer homogenen stabilen Suspension.

Ausserdem betrifft die vorliegende Erfindung ein Verfahren zur Herstellung einer Schlickerformulierung, wie sie oben beschrieben wurde, welches insbesondere dadurch gekennzeichnet ist, dass eine wässrige Lösung des keramischen Binders mit dem keramischen Füllstoff versetzt und zu einer Suspension vermischt wird, vorzugsweise unter Behandlung in einem Mischer mit schnell rotierendem Messer wie beispielsweise einem Ultra-Turrax oder unter Behandlung mit Ultraschall, und gegebenenfalls anschließend die Viskosität unter Zugabe von Wasser eingestellt wird, vorzugsweise auf eine Viskosität der Schlickerformulierung im Bereich von 50-5000 mPas (je nachdem ob die Suspension mit dem Pinsel, der Spritzpistole oder einem Spachtel verarbeitet wird).

Entscheidend für die Qualität und Leistungsfähigkeit der keramischen Suspensionen, die für thermische Schutzschichten auf Nickelbasislegierungen eingesetzt werden sollen, ist insbesondere die Kombination der beschriebenen Parameter (Art des keramischen Binders und Füllstoffs, mittlere Korngröße und Gewichtsanteil des Füllstoffs, Dispergierung des Füllstoffs).

Für Testzwecke werden mit den beschriebenen Suspensionen auf Inconelsubstraten Beschichtungen durchgeführt, die Schichten getrocknet und anschließend mit Hilfe des Thermoschocktests geprüft.

Zudem betrifft die vorliegende Erfindung ein Verfahren zum Aufbau eines Bereiches (typischerweise lokal begrenzter Bereich wie beispielsweise Patch respektive Streifen) aus einer thermischen Schutzschicht mit einer Schlickerformulierung, wie sie oben beschrieben wurde.

Das Verfahren ist insbesondere dadurch gekennzeichnet, dass die Schlickerformulierung in 2-4 Auftragungsschritten (Ausnahmsweise können auch höchstens fünf oder sechs Auftragungsschritte eingesetzt werden, wenn besonders dicke Schichten aufgebaut werden sollen, oder es ist auch möglich, wenn beispielsweise eine besonders dünne Schicht aufgebaut werden soll, nur einen Auftragungsschritt durchzuführen) von normalerweise je 0.05-0.3 mm Schichtauftrag zu einer gesamten Schichtdicke von typischerweise 0.4-1 mm direkt auf ein metallisches Substrat, typischerweise im wesentlichen ohne Verbindungsschicht (im Randbereich zu angrenzenden thermischen Schutzschicht kann aber zum Beispiel noch Verbindungsschicht vorhanden sein) aufgetragen wird.

Dabei wird bevorzugtermassen nach jedem Auftragungsschritt die bereits aufgetragene Schicht vorläufig getrocknet (z.B. mit einem Fön bei 70-80°C), und danach wird der gesamte Schichtaufbau in einem bevorzugt zweistufigen Trocknungsvorgang respektive Härtungsvorgang abgeschlossen. Dieser zweistufige Vorgang umfasst eine Langzeitbehandlung bei vergleichsweise niedriger Temperatur und eine Kurzzeitbehandlung bei vergleichsweise hoher Temperatur, so typischerweise folgende Schritte: Während wenigstens 6 h wird der gesamte Schichtaufbau bei einer Temperatur von 80-100 °C gehalten und anschließend während wenigstens 15 min bei einer Temperatur von wenigstens 400 °C.

Typischerweise erfolgt mit anderen Worten der Auftrag ohne aufwändiges Plasmaverfahren.

Bevorzugtermassen ist die Gesamtprozessdauer weniger als 24 h.

Eine bevorzugte Ausführungsform dieses Verfahrens ist dadurch gekennzeichnet, dass der zu beschichtende Oberflächenbereich vor der Auftragung der Schlickerformulierung gereinigt wird. Dies ist beispielsweise möglich unter Verwendung von Stahlbürsten, und/oder Schleifpapier und/oder Reinigungsflüssigkeiten. Eine besonders vorteilhafte Eigenschaft der vorgeschlagenen Schlickerformulierung ist es, dass es möglich ist, eine solche Vorbereitung der Oberfläche ohne Sandstrahlen durchzuführen und trotzdem eine genügende Haftung auf der Unterlage auch ohne Verbindungsschicht zu erzielen. Dies ist insbesondere dann von großem Vorteil, wenn, wie bevorzugt, das Verfahren unter sehr beschränkten Platzverhältnissen beispielsweise innerhalb einer montierten Gasturbine in der Brennkammer zur Überdeckung von Verbindungen (Schweißnähten) von Wandelementen derselben eingesetzt werden soll. Ist an solchen Stellen eine Strahlbehandlung der Oberfläche erforderlich, so entstehen dadurch hohe Aufwendungen, weil einerseits umgebende Bereiche abgedeckt werden müssen und andererseits das Strahlmaterial nach der Behandlung wieder aus den angrenzenden und umgebenden Bereichen entfernt werden muss.

Eine weitere bevorzugte Ausführungsform des Verfahrens ist dadurch gekennzeichnet, dass die Schlickerformulierung jeweils unter Zuhilfenahme eines Pinsels, einer Rolle, eines Spachtels und/oder einer Spitzpistole aufgetragen wird. Mit anderen Worten erlaubt es die vorgeschlagene Schlickerformulierung aufgrund ihrer Eigenschaften, auf aufwändige Auftragungsmethoden wie beispielsweise Plasma-Verfahren zu verzichten, was es ermöglicht, das vorgeschlagene Verfahren wiederum auch unter sehr beschränkten Platzverhältnissen beispielsweise wie oben beschrieben innerhalb einer montierten Gasturbine der Brennkammer einzusetzen und ohne übermäßigen apparativen Aufwand.

Typischerweise wird beim abschließenden Behandlungsschritt des gesamten Schichtaufbaus dieser während wenigstens 6 h bei einer Temperatur von im Bereich von 95 °C und anschließend während 15-30 min bei einer Temperatur im Bereich von 400 °C getrocknet und ausgehärtet.

Insbesondere bei Einsatz des Verfahrens bei montierter Gasturbine respektive genauer bei montierter Brennkammer zur Verbindung der Wandelemente (Halbschalen) ist es von großem Vorteil, wenn nach jedem Auftragungsschritt die jeweils bereits vorhandenen Schichten und/oder der gesamte Schichtaufbau unter Zuhilfenahme eines auf den neu beschichteten Bereich aufgesetzten und diesen im wesentlichen vollständig überdeckenden Trocknungsaufsatzes getrocknet und ausgehärtet wird. Ein solcher Trocknungsaufsatz kann aufgrund der Symmetrie einer Brennkammer und der dabei eingesetzten Schweißnähte (typischerweise axial verlaufend und entsprechend sind normalerweise alle Schweißnähte in einer gleichen oder wenigstens ähnlichen Oberflächentopologie angeordnet) häufig für alle Schweißnähte ausgelegt werden.

Bevorzugtermassen handelt es sich beim Bereich, der mit der neuen Schicht überdeckt werden soll, um eine Schweissnaht, insbesondere um eine Schweissnaht zwischen Halbschalen (oder Viertelschalen) für eine Brennkammer.

Der Trocknungsaufsatz hat insbesondere dann die Form eines einseitig offenen und im wesentlichen nur den beschichteten Bereich überdeckenden Kastens oder einer Abdeckung, deren Innenseite die Trocknung und/oder Aushärtung bevorzugen respektive beschleunigen kann, beispielsweise indem die Innenseite respektive der innenseitige Hohlraum mit Heißluft beaufschlagt wird oder mit einer elektrischen Widerstandsheizung geheizt wird (auch Lichtenergie oder eine andere Energieform kann eingetragen werden). Vorzugsweise ist dabei der Trocknungsaufsatz im wesentlichen entlang aller seiner Wände (seitlich und nach oben) mit einer Isolationsschicht versehen.

Eine weitere bevorzugte Ausführungsform des vorgeschlagenen Verfahrens ist dadurch gekennzeichnet, dass es zur Beschichtung von dem Heissgasstrom ausgesetzten Bereichen in einer Gasturbine bei im wesentlichen im entsprechenden Bereich zusammengesetzter Gasturbine durchgeführt wird.

Das Verfahren kann also zur Beschichtung der Schweissnaht zwischen Wandungsbereichen der Brennkammer eingesetzt werden, typischerweise angrenzend an bereits vorhandene thermische Schutzschichten auf den aneinander grenzenden Wandungsbereichen. Vorzugsweise haben solche bereits vor der Montage auf den Wandungsbereichen innenseitig vorgesehene thermische Schutzschichten eine Dicke im Bereich von 0.4-1.5 mm. Die thermischen Schutzschichten erstrecken sich dabei normalerweise nicht bis ganz an die Kante, wo die Schweissnaht angeordnet ist, typischerweise ist im Kantenbereich der Wandungsbereiche ein Oberflächen-Streifen einer Breite von 5-15 mm nicht mit einer solchen thermischen Schutzschicht versehen.

Die Beschichtung über der Schweissnaht verfügt typischerweise über eine gesamte Breite im Bereich von 10-40 mm (jeweils normalerweise 5-20 mm über einem der beiden verbundenen Wandelemente), vorzugsweise im Bereich von 20-35 mm, wobei vorzugsweise die jeweils angrenzende bereits vorher aufgetragene thermische Schutzschicht auf dem jeweiligen Wandelement eine Abschrägung mit einer Breite im Bereich von 2-10 mm aufweist.

Des weiteren betrifft die vorliegende Erfindung eine Brennkammer (oder eine Gasturbine mit einer solchen Brennkammer) mit wenigstens einer aus mit Schweißnähten verbundenen Elementen gefügten Brennkammerwand, wobei wenigstens eine Schweissnaht mit einer durch einen nach einem Verfahren wie oben beschrieben hergestellten Schutzschichtbereich (Patch, Streifen) unmittelbar (das heißt typischerweise im wesentlichen ohne Verbindungsschicht oder höchstens im Randbereich mit Verbindungsschicht) überdeckt ist.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

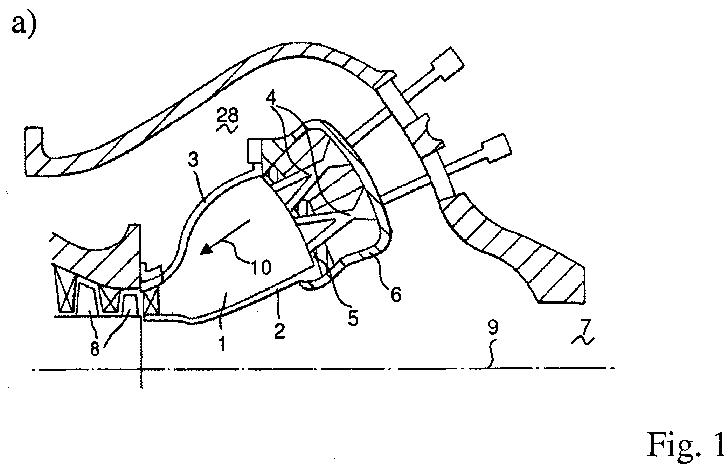

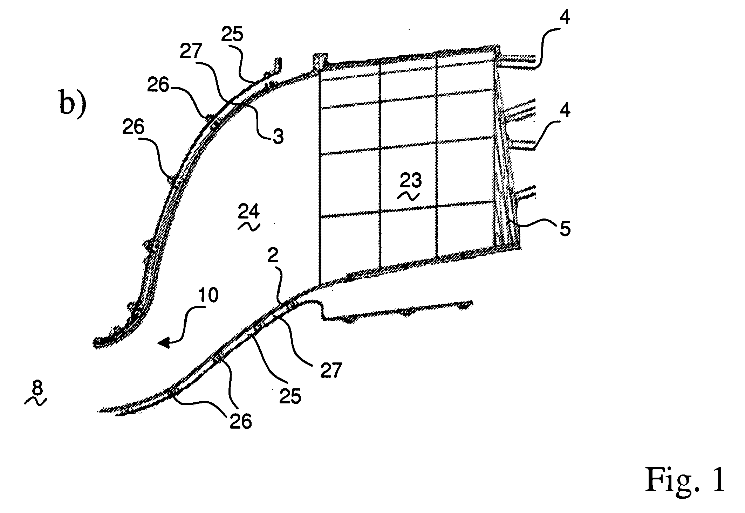

- Fig. 1: in a) einen axialen Schnitt durch die Mittelpartie einer Gasturbine mit Ringbrennkammer gemäß einer ersten Bauweise und in b) gemäß einer zweiten Bauweise mit Brennkammer mit zwei Zonen,

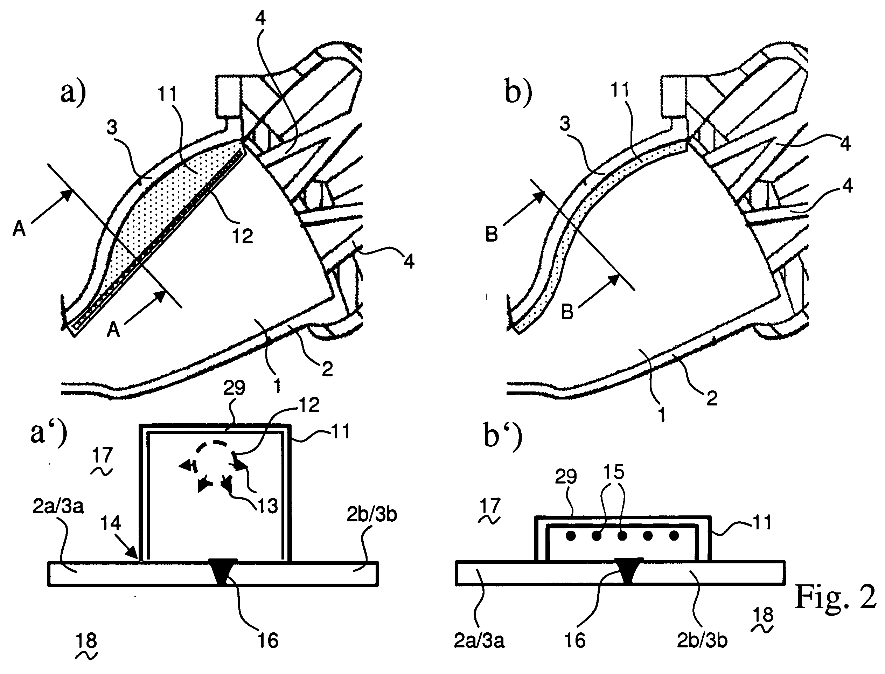

- Fig. 2: in a) einen axialen Teilschnitt durch eine Brennkammer mit eingesetztem Trocknungsaufsatz gemäß einem ersten Ausführungsbeispiel und in a') einen Schnitt entlang der Linie A-A in Figur 2 a), sowie in b) einen axialen Teilschnitt durch eine Brennkammer mit eingesetztem Trocknungsaufsatz gemäß einem zweiten Ausführungsbeispiel und in b') einen Schnitt entlang der Linie B-B in Figur 2b,

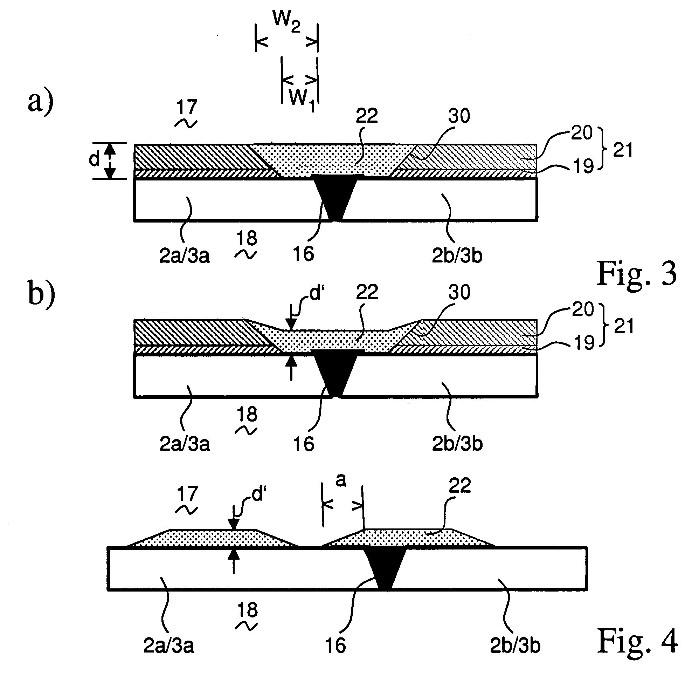

- Fig. 3: Schnitte im wesentlichen senkrecht zur Verlaufsrichtung der Schweissnaht zwischen den Halbschalen in einer Ebene im wesentlichen senkrecht zu den Halbschalen, wobei in a) eine Situation dargestellt ist, in welcher der auf die Schweissnaht aufgetragene Schutzschichtbereich ungefähr die gleiche Dicke hat wie die thermische Schutzschicht auf den Halbschalen, in b) eine Situation dargestellt ist, in welcher der auf die Schweissnaht aufgetragene Schutzschichtbereich dünner ist als die thermische Schutzschicht auf den Halbschalen; und
- Fig. 4: einen Schnitt im wesentlichen senkrecht zur Verlaufsrichtung der Schweissnaht zwischen den Halbschalen in einer Ebene im wesentlichen senkrecht zu den Halbschalen, wobei zwei Patches aus Schutzschichtbereich auf Halbschalen ohne thermische Schutzschicht aufgebracht sind.

### BESCHREIBUNG BEVORZUGTER AUSFÜHRUNGSFORMEN

Fig. 1 a) zeigt einen Schnitt durch die Mittelpartie einer Gasturbine, das heisst den Bereich zwischen Kompressor und Turbine sowie die Endstufe des Kompressors und die erste Stufe der Turbine.

Ein Kompressor 7 verdichtet die Luft. Der grösste Teil der Luft wird über das Kompressorplenum 28 in eine Ringbrennkammer 1 eingeleitet und mit Brennstoff vermischt, der dort verbrennt. Von dort strömen die heissen Brenngase 10 unter Arbeitsabgabe durch eine Turbine 8 ab, welche um eine Achse 9 rotiert. Die Ringbrennkammer 1 wird von einer Aussenschale 3, einer Innenschale 2 und einer Frontplatte 5, durch die über Brenner 4 der mit Kompressorendluft vorgemischte Brennstoff eingeleitet wird, umschlossen. Ein Teil der Kompressorendluft wird vor der Einleitung in die Ringbrennkammer 1 an der Innenschale 2 und Aussenschale 3 zur Kühlung entlang geleitet. Zur Führung der Kühlluft wird normalerweise um die Brennkammerschalen2, 3 eine äussere Kühlluftführungshülle und eine innere Kühlluftführungshülle jeweils in Form von Abdeckblechen vorgesehen. Um eine Druckdifferenz zu erzeugen, die die Kühlluft zwischen Kühlluftführungshülle und Brennkammerschale entlang strömen lässt, ist am Austritt der Kühlluftführungshülle eine Brennerhaube 6 angeordnet, in der ein unter dem Kompressorplenumdruck liegender Druck herrscht. Von dieser fliesst die Luft über die Brenner 4 oder als Frontplattenkühlluft in die Ringbrennkammer 1. Der Druckverlust zwischen Kompressorplenum 28 und Ringbrennkammer 1 wird damit in einen Teil zur Brennschalenkühlung und einen Teil zur Frontplattenkühlung bzw. Zumischung in die Brenner 4 aufgeteilt.

Figur 1 b) zeigt eine etwas andere Bauweise eine Ringbrennkammer, bei welcher diese eine erste Zone 23 aufweist, welche segmentiert ist, sowie eine zweite Zone 24, welche umlaufend ist. Innenschale 2 und Außenschale 3 begrenzen dabei diese zweite Zone 24. Zum Anschluss an die Gehäuseteile der ersten Zone 23 verfügen Innenschale 2 und/oder Außenschale 3 typischerweise über flanschartige Erweiterungen, welche von der Brennkammer abgewandt sind. In diesem Ausführungsbeispiel ist zudem die äußere Kühlluftführungshülle und die innere Kühlluftführungshülle erkennbar, diese sind jeweils in Form von Abdeckblechen 25 ausgebildet, welche mit gleichzeitig als Distanzhalter dienenden Befestigungselemente 26 an Innenschale 2 respektive Außenschale 3 aussenseitig befestigt sind. So bildet sich zwischen der jeweiligen Schale und der entsprechenden Hülle ein Kanal 27 zur Führung der Kühlluft wie oben erläutert.

Innenschale 2 und Außenschale 3 sind dabei typischerweise in Form von 180° um die Brennerachse geführte Halbschalen ausgebildet, jeweils eine untere Halbschale und eine obere Halbschale. Bei der Montage wird die untere Halbschale vorgegeben, die axial anzubringenden zentralen Elemente eingelegt und anschliessend jeweils die obere Halbschale aufgelegt. Die inneren Halbschalen 2a und 2b stoßen anschließend an im wesentlichen in einer horizontalen Ebene liegenden Kanten aneinander, und die äußeren Halbschalen 3a und 3b stoßen ebenfalls an im wesentlichen in einer gleichen horizontalen Ebene liegenden Kanten aneinander (siehe beispielsweise Fig. 2a', 2b'). An diesen Kanten werden die Halbschalen unter Zuhilfenahme eines Schweißprozesses nach dem Zusammensetzen, das heißt unter sehr eingeschränkten Platzverhältnissen, verbunden. So bildet sich eine im wesentlichen stufenlose Ummantelungsfläche für die Brennkammer.

Der Bereich dieser Verbindungslinie (d.h. der Schweissnaht an der Angrenzung zwischen den benachbarten Kanten der Ummantelunosabschnitte) ist den hohen Temperaturen und den thermischen Belastungen während des Betreibens der Gasturbine ausgesetzt. Gegenstand der Erfindung ist es, in diesem Bereich der Verbindungslinie eine thermische Schutzschicht aufbringen zu können, obwohl die Elemente bereits zusammengebaut sind und entsprechend schwierigste Platzverhältnisse herrschen.

Tatsächlich sind die Bleche, welche die Halbschalen 2a/2b respektive 3a/3b bilden, auf ihrer der Brennkammer zugewandten Seite über beinahe die gesamte Oberfläche mit einer thermischen Schutzschicht versehen. Deren typischer Aufbau ist aus Figur 3 ersichtlich. Auf dem metallischen Grundkörper 2/3 ist zunächst eine Verbindungsschicht (bond coat) 19 auf metallischer Basis, typischerweise auf Basis von Ni, A1 und Cr, oder Co, Ni, A1 und Cr oder Pt und A1 basierten Legierungen, angeordnet. Die Beschichtungen können auch in Form von Strukturen der Formel MA1 vorliegen, wobei M wenigstens ein Element ausgewählt aus der Gruppe Fe, Ni, Co ist, beispielsweise in Form von MA1, MA1Y, MCrA1, MCrA1Y oder aber auch PtA1. Ebenfalls möglich sind Systeme des Typs MCrAI(X) wobei wiederum M ausgewählt ist aus der Gruppe Ni, Co, Fe und Kombinationen daraus; X ein Element ausgewählt ist aus der Gruppe Y, Ta, Si, Hf, Ti, Zr, B, C und Kombinationen davon.

Auf dieser Verbindungsschicht 19 ist eine keramische thermische Schutzschicht 20 angeordnet, welche typischerweise nur infolge der Verbindung vermittelnden Verbindungsschicht 19 auf dem Substrat 2/3 genügend haftet. Diese keramische Schicht 20 besteht normalerweise aus mit 6-8 Gewichtsprozent Yttriumoxid stabilisiertem Zirkonoxid (YSZ), wie es aus der US 4,485,151 bekannt ist. Normalerweise wird der Aufbau aus Verbindungsschicht 19 und keramischer Schicht 20 als thermische Schutzschicht 21 bezeichnet.

Die metallischen Verbindungsschichten sowie die keramische Schicht können unter Zuhilfenahme von Dampfabscheidung wie beispielsweise PVD, CVD, oder thermischen Sprühmethoden, sowie auch Plasmaspray Methoden aufgebracht werden.

Im Randbereich, und zwar dort, wo die zwei Halbschalen aneinandergrenzen, verfügen die der Brennkammer zugewandten Oberflächen nicht über eine solche thermische Schutzschicht 21, dies normalerweise über einen der Kante entlang verlaufenden Streifen wobei eine gesamte frei liegende Breite von circa 30 mm entsteht, das heißt jedes Blech verfügt am Rand über eine Breite von 10-15 mm nicht über eine solche thermische Schutzschicht. Dies, um anschließend die Ausbildung einer Schweissnaht 16 zu ermöglichen.

Unter Verwendung der heute üblichen Verfahren zum Aufbringen einer thermischen Schutzschicht ist es nicht möglich, diesen Bereich der Schweissnaht 16 mit einer thermischen Schutzschicht zu versehen. Deshalb auch die eingangs genannten aufwändigen konstruktiven Schutzmaßnahmen aus dem Stand der Technik zur Vermeidung einer Überhitzung der Schweissnaht und der daran angrenzenden Bereiche, indem beispielsweise zusätzliche Kühlluftströme oder separate über der Schweissnaht angeordnete Hitzeschilde angeordnet werden. Problematisch ist im Zusammenhang mit dem Aufbringen einer thermischen Schutzschicht einerseits die Tatsache, dass im montierten Zustand (und nur in diesem können die Halbschalen miteinander verschweißt werden) eine Oberflächenbehandlung wie Sandstrahlen oder die Verwendung einer Technologie wie Plasma-Spraymethode so gut wie unmöglich ist (Schutzmaßnahmen, Reinigungsmaßnahmen, keine Automatisierung on-site möglich nach der Trennebenenschweissung der Verbindungsnaht). Des weiteren ermöglichen es die Auftragungsverfahren und die zur Verfügung stehenden Materialien nach dem Stand der Technik nicht, in wenigen Schritten eine genügende Schichtdicke aufzubauen.

Entsprechend schlägt die vorliegende Erfindung sowohl eine neue Schlickerformulierung (Keramiksuspension) vor, welche unter diesen Bedingungen eingesetzt werden kann, als auch ein neuartiges schnelles und unkompliziertes Verfahren zum Aufbringen einer solchen Schlickerformulierung für den Aufbau einer thermischen Schutzschicht von genügender Dicke.

Die neu vorgeschlagene Schlickerformulierung umfasst im wesentlichen einen keramischen Binder, keramische Füllstoffe und gegebenenfalls weitere Additive. Der keramische Binder ist wesentlich verantwortlich für die Haftung auf dem Substrat, insbesondere in der vorliegenden Situation, wo auf eine metallische Verbindungsschicht (bond coat) verzichtet werden soll. Die Temperaturwechselbeständigkeit wird stark durch die Füllstoffe beeinflusst. Der thermische Ausdehnungskoeffizient des Füllstoffes sollte möglichst nah an demjenigen des Grundwerkstoffs (Substrat) liegen. Zudem sollte der Füllstoff eine möglichst niedrige thermische Leitfähigkeit besitzen, damit eine möglichst hohe thermische Abschirmung gewährleistet wird.

Auf dem Markt gibt es eine ganze Reihe von keramischen Klebern und Lacken, die zur Herstellung von thermischen Schutzschichten angeblich geeignet sein sollen. Eine Anwendung auf Nickelbasislegierungen bei 1000-1100 °C ist allerdings bei solchen kommerziellen Systemen nicht erwähnt. Laborversuche sowie Feldversuche unter Verwendung von solchen kommerziellen Systemen haben gezeigt, dass sie für die vorgesehene Anwendung auf einer Schweissnaht in einer Brennkammer unbrauchbar sind. In einem Vergleichsexperiment wurden zum Beleg dieser Tatsache Inconel 617-Substrate durch Streichen mit kommerziellen Keramiksuspensionen beschichtet und nach Herstellerangaben getrocknet (Schichtdicke 0.1-0.3 mm). Im Thermoschocktest (5 min im fluidisierten Sandbad bei 1000°C und 5 min im fluidisierten Sandbad bei 20°C entsprechen einem Zyklus) wurde die Beständigkeit der Schichten getestet. Allerdings zeigt es sich, dass die Schutzschichten unter Verwendung von kommerziellen Materialien schon nach wenigen Zyklen abgeplatzt waren und somit für die vorgesehene Anwendung ungeeignet sind. Entsprechend verfügen die kommerziellen Schlickerformulierungen respektive daraus hergestellte thermische Schutzschichten nicht über eine genügende Haftung auf dem Grundwerkstoff und nicht über eine genügende Temperaturwechselbeständigkeit. Die entsprechenden Resultate sind in der folgenden Tabelle zusammengestellt:

| **Beschichtungssystem** | **Haftung bei R-T** | **Thermische Zyklen bis zur Delamination** |
|---|---|---|
| Ceramabond 569 | Gut | 1 |
| Ceramabond 571 | Gut | 3 |
| Fiberfrax QF-180 | Gut | 10 |
| Pyro-Putty 677 | Nur auf sandgestrahlter Oberfläche | 1 |
| Cerama-Dip 538-N | Gut | 1 |
| Pyro-Paint 634-AS | Nur auf sandgestrahlter Oberfläche | 2 |

Gefordert wird aber im genannten Thermoschocktest eine Mindestlebensdauer von 200 thermischen Zyklen. Dies wird durch die thermischen Schutzschichten auf Basis der neu vorgeschlagenen Schlickerformulierung ohne weiteres erreicht. Tatsächlich werden 300-500 Zyklen erreicht, wenn die vorgeschlagenen Schlickerformulierungen verwendet werden.

Nach der Erfindung wird eine solche Schlickerformulierung auf eine metallische Oberfläche (gerolltes Material, gefrästes Material, mit oder ohne Schweissnaht, beispielsweise zwischen zwei Halbschalen für eine Brennkammer) mit einem Spachtel, einer Rolle, einem Pinsel oder mit einem Luftsprühverfahren in wenigen Schritten (nicht mehr als vier Auftragungsschritte) aufgetragen und jeweils dazwischen angetrocknet bis eine Schichtdicke im Bereich von 0.4-1 mm erreicht ist und am Ende abschließend getrocknet und ausgehärtet. So können derartige Patches respektive Streifen beispielsweise über einer Schweissnaht zwischen solchen Halbschalen innerhalb eines Tages auch unter den engen Platzverhältnissen in der montierten Brennkammer einfach und schnell hergestellt werden.

So ist es möglich, den Bereich (beispielsweise im Bereich der Schweissnaht) vor Hitze und Korrosion zu schützen. Des weiteren ist es möglich, aufgrund der speziellen gewählten Schlickerformulierung, auf die Verwendung einer Verbindungsschicht (bond coat) vollständig zu verzichten, und es kann auch auf ein Sandstrahlen der Oberfläche vor dem auftragen der Schlickerformulierung verzichtet werden. Es ist kein schweres aufwändiges Plasma-Equipment erforderlich, wie dies für die normalen TBC Auftragungsverfahren erforderlich ist. Es kann innerhalb eines Tages eine solche Schicht vollständig aufgebaut werden, ein solcher Schichtaufbau kann auch wiederholt aufgetragen werden und beispielsweise für die lokale Reparatur bei Inspektionen eingesetzt werden.

Nachfolgend werden einige Ausführungsbeispiele beschrieben:
Zunächst werden die Inconelsubstrate (60x40x7mm) mit Sandpapier (50-90iger Körnung) angeschliffen, so dass eine angerauhte, metallisch-saubere Oberfläche ensteht. Diese Oberfläche wird dann noch mit organischen Lösungsmitteln gereinigt und entfettet.

Mit Hilfe eines Pinsels oder einer Spritzpistole wird anschließend die Keramiksuspension in mehreren Schichten aufgetragen bis eine Gesamtschichtdicke von 0,2-0,8mm erreicht ist (Einzelschichtdicke ca. 0,1-0,2 mm). Die Einzelschichten werden z.B. mit einem Fön 1-3 min bei 70-80°C zwischengetrocknet. Die Endtrocknung der Gesamtschicht erfolgt in einem Ofen bei 75-95°C für 4-16 Stunden.

Die Leistungsfähigkeit der so hergestellten Schichten wird dann in einem Thermoschocktest bei 1000°C überprüft. Dabei taucht die Probe abwechselnd in ein fluidisiertes Sandbad mit 1000°C bzw. 20°C ein. Die Zahl der Zyklen, die die Beschichtung überlebt bis erste Abplatzungen auftreten wird als Lebensdauer der Schicht bezeichnet.

Die mit den beschriebenen Suspensionen und dem beschriebenen Verfahren hergestellten Schichten haben im Thermoschocktest 300-500 Zyklen erreicht, was die Anforderungen für die geplante Anwendung mehr als erfüllt.

### Beispiel 1:

100 g einer wässrigen Natriumsilikatlösung (Modul 2,5; ca. 40 Gew.-% Natriumsilikat in Wasser) werden mit 96 g Yttriumoxid stabilisiertem Zirkonoxid mit einer mittleren Korngröße von 0,3 µm gemischt und mit einem Holzspatel gut verrührt.

Anschließend wird die Mischung 15 min lang mit Ultraschall behandelt. Es bildet sich eine mäßig viskose, homogene stabile Suspension, die mit einem Pinsel oder einer Spritzpistole gut verarbeitet werden kann.

### Beispiel 2:

Wie Beispiel 1, als wässrige Alkalisilikatlösung wird allerdings eine Mischung aus 60 g derselben Natriumsilikatlösung (Modul 2,5) und 40 g Kaliumsilikatlösung (Modul 2,4; ca. 35 Gew.-% Kaliumsilikat in Wasser) eingesetzt. Es bildet sich ebenfalls eine homogene stabile Suspension aus, die gut verarbeitet werden kann.

### Beispiel 3:

Wie Beispiel 1, als Füllstoff werden allerdings 67 g Magnesiumoxid mit einer mittleren Korngröße von 0,05 µm eingesetzt. Auch in diesem Fall entsteht eine homogene stabile Suspension mit guten Verarbeitungseigenschaften.

### Beispiel 4:

Mit der Keramiksuspension aus Beispiel 1 wird mit Hilfe einer Druckluftspritzpistole ein Inconelsubstrat (LängexBreitexDicke=60x40x7mm) beschichtet. Das Substrat wird vorher mit Schleifpapier (50iger Körnung) abgeschliffen und mit Aceton abgespült. Nach dem Verdunsten des Lösungsmittels wird die Probe senkrecht in einer Spritzkabine positioniert und mit der Spritzpistole schrittweise 5 mal beschichtet. Die einzelnen Schichten werden mit dem Fön 2 min zwischengetrocknet. Aufgrund der optimierten Viskosität der Suspension laufen die Einzelschichten nicht ab und es bildet sich eine glatte homogene Gesamtschicht aus. Die Endtrocknung erfolgt im Ofen bei 80°C für 10 Stunden. Mit einem Schichtdickenmessgerät (Wirbelstromverfahren) wird nach dem Trocknen eine Schichtdicke von 0,4 -0,5 mm gemessen.

Beim Thermoschocktest im fluidisierten Sandbad (1 Zyklus = 5 min bei 1000°C + 5min bei 20°C) erreicht die Probe eine Lebensdauer von 430 Zyklen.

In Figur 3 sind zwei Schnittdarstellungen eines Schichtbereichs 22, welcher mit dem vorgeschlagenen Verfahren hergestellt werden kann, dargestellt. Die jeweiligen Halbschalen 2a/2b respektive 3a/3b stossen stumpf aufeinander (typischerweise mit in einem V abgeschrägten Flanken) und an diesem Stoss ist die Schweissnaht 16 angeordnet. Auf den jeweiligen Halbschalen 2/3 ist auf der der Heissgasseite 17 zugewandten Oberseite - im Gegensatz zur unbeschichteten Rückseite 18 - bereits eine vorgängig aufgetragene klassische thermische Schutzschicht 21 aufgebaut, diese umfasst, wie oben bereits erläutert, eine Verbindungsschicht 19 und auf dieser der Heissgasseite 17 zugewandte keramische Schicht 20.

Im aneinander stoßenden Randbereich sind die Halbschalen 2/3 nicht mit einer solchen thermischen Schutzschicht 21 ausgestattet, d. h. über eine Breite W₁ von ca. 15 mm liegt bei jedem Element am Rand das metallische Material der Elemente 2/3 einfach frei. Dabei kann eine Abschrägung 30 der thermischen Schutzschicht 21 vorgesehen sein, damit der nachträglich aufgebrachte Streifen 22 im Randbereich besser anhaftet. Die Breite des unbeschichteten Randbereiches inklusive Abschrägung/Auslaufzone W₂ ist gegenüber W₁ entsprechend vergrössert.

Unter Verwendung des vorgeschlagenen Verfahrens wird nun auf die Schweissnaht 16 und auf den oberseitig freiliegenden Bereich der Elemente 2/3 die Schutzschicht 22 aufgetragen. Dies kann einerseits, wie in Figur 3a dargestellt, so geschehen, dass die Oberfläche des Bereichs 22 im wesentlichen bündig ist mit der umgebenden Schicht 21 und eine glatte Oberfläche entsteht.

Es ist aber auch möglich, wie dies in Figur 3b dargestellt ist, eine leichte Vertiefung im Bereich der Schweissnaht 16 auszubilden, in dem Fall ist dann bei einer Gesamtdicke d der thermischen Schutzschicht von ca. 0.4 - 1.1 mm die reduzierte Dicke der Schutzschicht 22 (reduzierte Dicke d'), im Bereich von 0.3 - 0.6 mm.

Die vorgeschlagene Schutzschicht 22 kann auch, wie dies in Figur 4 dargestellt ist, einfach nur zur Herstellung von Patches auf einer Oberfläche eingesetzt werden. Es ist also nicht erforderlich, dass die Schutzschicht 22 gewissermassen zwischen bereits vorhandene Bereiche von thermischen Schutzschichten 21 eingefügt wird, wie dies in Figur 3 dargestellt ist. Werden wie in Figur 4 dargestellt solche Patches oder Streifen individuell aufgebracht, so erweist es sich dabei als vorteilhaft, diese Patches respektive Streifen am Rand auslaufen zu lassen mit einem Auslaufbereich einer Breite a von ca. 5 mm. Andernfalls werden die Randbereiche zu stark belastet und können abspringen.

Zur erfolgreichen Durchführung des Verfahrens können dabei vorteilhafterweise für die Trocknungsschritte Trocknungsaufsätze eingesetzt werden, wie sie in Figur 2 dargestellt sind.

In Figur 2a sowie 2a', ist eine erste Bauweise eines solchen Trocknungsaufsatzes 11 dargestellt. Es handelt sich bei dieser Bauweise um eine kastenförmige Bauweise, bei welcher gewissermassen ein nach unten offener und mit einer Isolationsschicht 29 (diese Schicht kann aussen oder innen bezüglich einer Wandung vorgesehen sein) versehener Kasten mit einer geraden oberen Wand seitliche Wände aufweist, welche der Krümmung in diesem Fall der äusseren Brennerummantelung angepasst ist. Ein solcher Kasten kann, gegebenenfalls unter Verwendung von Dichtungen im Kontaktbereich 14, auf die Brennkammerwand die Schweissnaht 16 überdeckend aufgesetzt werden (vgl. Figur 2a').

In diesem Kasten 11 ist eine mit Heissluft beaufschlagte entlang des Kastens 11 verlaufende Leitung 12 (beispielsweise Kupferrohr) vorgesehen, wobei diese Leitung über Löcher (Perforationen) verfügt, so dass die Heissluft 13 über die gesamte Länge des Kasten 11 verteilt aus dieser Leitung 12 ausströmt und so die gesamte Schweissnaht 16 dort, wo eine Schutzschicht aufgetragen ist, beheizen und so trocknen/aushärten kann (in den Figuren 2a' und 2b' sind jeweils die aufgetragenen Schutzschichten zur besseren Visualisierung nicht dargestellt).

In Figur 2b ist eine alternative Bauweise dargestellt. Während ein Kasten nach Figur 2a an der höchsten Stelle durchaus eine Höhe von ca. 15 cm aufweisen kann, dies bei einer Breite von ca. 7-12 cm, ist die Bauweise gemäss Figur 2b wesentlich flacher ausgestaltet und verfügt über eine Höhe von ca. 2-4 cm bei einer Breite von circa 7-16 cm. Der hier verwendete Kasten schmiegt sich über seine ganze Länge im wesentlichen der Kontur der Brennkammer an und liegt unmittelbar über der Schweissnaht 16 unter Ausbildung eines Hohlraums mit geringem Volumen. In diesem Hohlraum und am Trocknungsaufsatz 11 befestigt sind Heizdrähte 15 angeordnet. Zum Trocknen einer Schutzschicht 22 wird dieser längliche Kasten oder besser diese längliche Abdeckung auf die neu erzeugte Schutzschicht 22 aufgelegt und die Heizung an eine elektrische Stromquelle angeschlossen. Auch hier ist der Kasten 11 mit einer Isolationsschicht 29 versehen.

**BEZUGSZEICHENLISTE**

| | | | |
|---|---|---|---|
| 1 | ringförmige Brennkammer | 21 | thermische Schutzschicht |
| 2 | innere Brennerummantelung | | (thermal barrier coating, |
| 2a | obere Halbschale von 2 | | TBC) |
| 2b | untere Halbschale von 2 | 22 | Schutzschichtbereich |
| 3 | äußere Brennerummantelung | 23 | Zone 1 |
| 3a | obere Halbschale von 3 | 24 | Zone 2 |
| 3b | untere Halbschale von 3 | 25 | äusseres Abdeckblech |
| 4 | Doppelkegelbrenner | 26 | Befestigungen/Distanzhalter |
| 5 | Frontplatte | 27 | Hohlraum für Kühlluftstrom |
| 6 | Brennerhaube | 28 | Kompressorplenum |
| 7 | Kompressor | 29 | Isolationsschicht |
| 8 | Turbine | 30 | Abschrägung von 21 |
| 9 | Achse | | |
| 10 | heißer | W₁ | Breite des unbeschichteten |
| | Verbrennungsluftstrom | | Randbereichs von 2/3 |
| 11 | Trocknungsaufsatz | W₂ | Breite des unbeschichteten |
| 12 | Heißluftleitung | | Randbereichs inklusive |
| 13 | ausströmende Luft aus 12 | | Abschrägung/Auslaufzone |
| 14 | Kontaktbereich zwischen 2/3 | d | Dicke der thermischen |
| | und 11 | | Schutzschicht |
| 15 | Heizdrähte | d' | Dicke des |
| 16 | Schweissnaht | | Schutzschichtbereichs |
| 17 | Heissgasseite | a | Breite der |
| 18 | Rückseite | | Abschrägung/Auslaufzone |
| 19 | Verbindungs schicht (bond | | |
| | coat, BC) | | |
| 20 | keramische Schicht | | |

## Patentansprüche

1. Schlickerformulierung für die Herstellung eines Patches oder eines Streifens aus einer thermische Schutzschicht (22) mit einem keramischen Binder, keramischen Füllstoffen und gegebenenfalls weiteren Additiven, wobei die Schlickerformulierung
20-60 Trocken-Gewichtsprozent Alkalisilikat-Binder;
40-80 Trocken-Gewichtsprozent keramische Füllstoffe ausgewählt aus der Gruppe: Yttriumoxid stabilisiertes Zirkonoxid, Magnesiumoxid, oder Mischungen davon;
0-20 Trocken-Gewichtsprozent Additive ausgewählt aus der Gruppe: Aluminiumphosphate, Microsilica, Metakaolin aufweist, wobei sich die Trocken-Gewichtsanteile aller Bestandteile auf 100 % ergänzen;
sowie ein Lösungsmittel respektive Suspensionsmittel.

2. Schlickerformulierung nach Anspruch 1, **dadurch gekennzeichnet, dass** das Lösungsmittel respektive Suspensionsmittel Wasser ist, wobei vorzugsweise so viel Wasser zugegeben wird, dass die Schlickerformulierung eine Viskosität bei Raumtemperatur im Bereich von 50-5000 mPas aufweist, vorzugsweise von 500-1500 mPas.

3. Schlickerformulierung einem der vorhergehenden Ansprüche, **dadurch gekennzeichnet, dass** der Alkalisilikat-Binder ein Modul im Bereich von 1.8-3.5 aufweist, wobei es sich vorzugsweise um Lithiumsilikat, Natriumsilikat und/oder Kaliumsilikat mit einem Modul im Bereich von 2-2.5 handelt.

4. Schlickerformulierung nach einem der vorhergehenden Ansprüche, **dadurch gekennzeichnet, dass** die keramischen Füllstoffe eine mittlere Korngröße (d50) im Bereich von 0.01-1 µm aufweisen, vorzugsweise im Bereich von 0.05-0.5 µm, und dass die Füllstoffe einen Wärmeausdehnungskoeffizienten im Bereich des Wärmeausdehnungskoeffizienten eines gewünschten Auftragungssubstrats aufweist, vorzugsweise bei Raumtemperatur im Bereich von 10-15 (10E-6/K) aufweisen, bevorzugt im Bereich von 12-14 (10E-6/K).

5. Verfahren zur Herstellung einer Schlickerformulierung nach einem der vorhergehenden Ansprüche, **dadurch gekennzeichnet, dass** eine wässrige Lösung des Alkalisilikat-Binders mit dem keramischen Füllstoff versetzt und zu einer Suspension vermischt wird, vorzugsweise unter Behandlung in einem Mischer mit schnell rotierendem Messer wie insbesondere einem Ultra-Turrax und/oder unter Behandlung mit Ultraschall, und gegebenenfalls anschließend die Viskosität unter Zugabe von Wasser eingestellt wird, vorzugsweise auf eine Viskosität der Schlickerformulierung bei Raumtemperatur im Bereich von 50-5000 mPas.

6. Verfahren zum Aufbau eines Bereiches (22) aus einer thermischen Schutzschicht mit einer Schlickerformulierung nach einem der vorhergehenden Ansprüche 1 - 4, **dadurch gekennzeichnet, dass** die Schlickerformulierung in 2-4 Auftragungsschritten von 0.05-0.3 mm Schichtauftrag, bevorzugt von 0.1-0.2 mm Schichtauftrag, zu einer gesamten Schichtdicke von 0.4-1 mm direkt auf ein metallisches, vorzugsweise aufgerautes und metallisch reines, Substrat (2a/2b, 3a/3b) ohne Verbindungsschicht (19) aufgetragen wird, wobei nach jedem Auftragungsschritt die Schicht insbesondere mit einem Heißluftgebläse während einer Zeitspanne von bevorzugt 1-5 min bei bevorzugtermassen 70-80°C vorläufig getrocknet wird, und dass danach der gesamte Schichtaufbau während wenigstens 6 h bei einer Temperatur von 80-100°C °C und anschließend während wenigstens 15 min bei einer Temperatur von wenigstens 400 °C getrocknet und ausgehärtet wird, wobei bevorzugtermassen die gesamte Behandlung weniger als 24h in Anspruch nimmt.

7. Verfahren nach Anspruch 6, **dadurch gekennzeichnet, dass** der zu beschichtende Oberflächenbereich vor der Auftragung der Schlickerformulierung gereinigt wird, bevorzugtermassen unter Verwendung von Stahlbürsten, und/oder Reinigungsflüssigkeiten und mit Schleifpapier angeraut wird, wobei vorzugsweise die Reinigung ohne Sandstrahlen erfolgt.

8. Verfahren nach einem der vorhergehenden Ansprüche 6-7, **dadurch gekennzeichnet, dass** die Schlickerformulierung jeweils unter Zuhilfenahme eines Spachtels, einer Rolle, eines Pinsels, und/oder einer Spitzpistole aufgetragen wird, gegebenenfalls unter Abdeckung von Randbereichen, die nicht beschichtet werden sollen.

9. Verfahren nach einem der vorhergehenden Ansprüche 6-8, **dadurch gekennzeichnet, dass** der gesamte Schichtaufbau während wenigstens 6 h bei einer Temperatur von im Bereich von 95 °C und anschließend während 15-30 min bei einer Temperatur im Bereich von 400 °C getrocknet und ausgehärtet wird.

10. Verfahren nach einem der vorhergehenden Ansprüche 6-9, **dadurch gekennzeichnet, dass** der gesamte Schichtaufbau unter Zuhilfenahme eines auf den neu beschichteten Bereich aufgesetzten und diesen im wesentlichen vollständig überdeckenden Trocknungsaufsatzes (11) getrocknet und ausgehärtet wird.

11. Verfahren nach dem vorhergehenden Ansprüche 6-10, **dadurch gekennzeichnet, dass** es sich beim Bereich um eine Schweissnaht (16), insbesondere um eine Schweissnaht zwischen Halbschalen (2a/2b, 3a/3b) für eine Brennkammer (1) handelt, und dass der Trocknungsaufsatz (11) in Form eines im wesentlichen nur den Bereich überdeckenden Kastens oder einer Abdeckung ausgestaltet ist, deren Innenseite mit Heißluft beaufschlagt wird oder mit einer elektrischen Widerstandsheizung geheizt wird, wobei vorzugsweise der Trocknungsaufsatz (11) mit einer Isolationsschicht (29) versehen ist.

12. Verfahren nach einem der vorhergehenden Ansprüche 6-11, **dadurch gekennzeichnet, dass** es zur Beschichtung von dem Heissgasstrom ausgesetzten Bereichen in einer Gasturbine bei im wesentlichen im entsprechenden Bereich zusammengesetzter Gasturbine durchgeführt wird.

13. Verfahren nach dem vorhergehenden Ansprüche 6-12, **dadurch gekennzeichnet, dass** es zur Beschichtung der Schweissnaht zwischen Wandungsbereichen (2a/2b, 3a/3b) der Brennkammer eingesetzt wird, angrenzend an bereits vorhandene thermische Schutzschichten (21) auf den Wandungsbereichen (2a/2b, 3a/3b).

14. Verfahren nach dem vorhergehenden Ansprüche 6-13, **dadurch gekennzeichnet, dass** die Beschichtung (22) über der Schweissnaht (16) eine gesamte Breite im Bereich von 10-40 mm, vorzugsweise im Bereich von 20-35 mm aufweist, wobei vorzugsweise die jeweils angrenzende thermische Schutzschicht (21) eine Abschrägung (30) mit einer Breite im Bereich von 2-10 mm aufweist.

15. Gasturbine mit einer Brennkammer (1) mit wenigstens einer aus mit Schweißnähten (16) verbundenen Elementen (2, 3) gebildeten Brennkammerwand wobei wenigstens eine Schweissnaht (16) mit einer durch einen nach einem Verfahren gemäß der Ansprüche 6-14 hergestellten Schutzschichtbereich (22) unmittelbar überdeckt ist.

## Claims

1. Slurry formulation for production of a patch or a strip of a thermal barrier coating (22) with a ceramic binder, ceramic fillers and where applicable further additives, wherein the slurry formulation comprises:
20-60 dry weight percent of alkali silicate binder;
40-80 dry weight percent of ceramic fillers selected from the group yttrium oxide-stabilized zirconium oxide, magnesium oxide or mixtures thereof;
0-20 dry weight percent of additives selected from the group: aluminium phosphate, microsilica, metakaolin, wherein the dry weight proportions of all constituents make up 100%;
and a solvent or suspending agent.

2. Slurry formulation according to claim 1, **characterised in that** the solvent or suspending agent is water, wherein preferably the amount of water added is sufficient for the slurry formulation to have a viscosity at room temperature in the range of 50 - 5000 mPas, preferably 500 - 1500 mPas.

3. Slurry formulation according to one of the preceding claims, **characterised in that** the alkali silicate binder has a module in the range of 1.8 - 3.5, this being preferably lithium silicate, sodium silicate and/or potassium silicate with a module in the range of 2 - 2.5.

4. Slurry formulation according to any of the preceding claims, **characterised in that** the ceramic fillers have a mean grain size (d50) in the range of 0.01 - 1 µm, preferably in the range of 0.05 - 0.5 µm, and that the filler has a thermal expansion coefficient in the region of the thermal expansion coefficient of a desired application substrate, preferably at room temperature in the range of 10 - 15 (10E-6/K), preferably in the range of 12 - 14 (10E-6/K).

5. Method for production of the slurry formulation according to any of the preceding claims, **characterised in that** a watery solution of the alkali silicate binder is added to the ceramic filler and mixed into a suspension, preferably by treatment in a mixer with a rapidly rotating cutter such as in particular an Ultra-Turrax, and/or by treatment with ultrasound, and where applicable the viscosity is then adjusted by the addition of water, preferably to a viscosity of the slurry formulation at room temperature in the range of 50 - 5000 mPas.

6. Method for constructing a region (22) of a thermal barrier coating with a slurry formulation according to any of the preceding claims 1 - 4, **characterised in that** the slurry formulation is applied in 2 - 4 application steps each of 0.05 - 0.3 mm layer application, preferably of 0.1 - 0.2 mm layer application, up to a total layer thickness of 0.4 - 1 mm, directly onto a metallic, preferably roughened, and metallically pure substrate (2a/2b, 3a/3b) without connecting layer (19), wherein after each application step, the layer is provisionally dried in particular with a hot air fan during a time period of preferably 1 - 5 minutes at preferably 70 - 80 ºC, and that thereafter the entire layer structure is dried and hardened for at least 6 hours at a temperature of 80 - 100 ºC and then for at least 15 minutes at a temperature of at least 400 ºC, wherein preferably the entire treatment takes less than 24 hours.

7. Method according to claim 6, **characterised in that** the surface region to be coated is cleaned before application of the slurry formulation, preferably using steel brushes and/or cleaning fluids, and roughened with abrasive paper, wherein preferably the cleaning takes place without sandblasting.

8. Method according to one of the preceding claims 6 - 7, **characterised in that** the slurry formulation is applied in each case using a spatula, a roller, a brush and/or a spray gun, where applicable after masking of the edge regions which are not to be coated.

9. Method according to any of the preceding claims 6 - 8, **characterised in that** the entire layer structure is dried and hardened for at least 6 hours at a temperature in the region of 95 ºC and then for 15 to 30 minutes at a temperature in the region of 400 ºC.

10. Method according to any of the preceding claims 6 - 9, **characterised in that** the entire layer structure is dried and hardened using a drying cover (11) placed over the newly coated region and covering this substantially completely.

11. Method according to the preceding claims 6 - 10, **characterised in that** the region is a weld seam (16), in particular a weld seam between half shells (2a/2b, 3a/3b) for a combustion chamber (1), and that the drying cover (11) is configured in the form of a box or cover substantially covering only said region, the inside of which is exposed to hot air or heated with an electric resistance heater, wherein preferably the drying cover (11) is provided with an insulation layer (29).

12. Method according to any of the preceding claims 6 - 11, **characterised in that** it is carried out for coating regions of a gas turbine exposed to the hot gas flow in a gas turbine joined substantially in the corresponding region.

13. Method according to any of the preceding claims 6 - 12, **characterised in that** it is used to coat the weld seam between wall regions (2a/2b, 3a/3b) of the combustion chamber, adjacent to already existing thermal barrier coatings (21) on the wall regions (2a/2b, 3a/3b).

14. Method according to any of the preceding claims 6 - 13, **characterised in that** the coating (22) over the weld seam (16) has a total width in the range of 10 - 40 mm, preferably in the range of 20 - 35 mm, wherein preferably the adjacent thermal barrier coating (21) has a chamfered edge (30) with a width in the range of 2 - 10 mm.

15. Gas turbine with a combustion chamber (1) with at least one combustion chamber wall formed from elements (2, 3) joined by weld seams (16), wherein at least one weld seam (16) is covered directly with a barrier coating region (22) produced with a method according to claims 6 - 14.

## Revendications

1. Formulation de barbotine pour la fabrication d'une pastille ou d'une bande à partir d'une couche de protection thermique (22), comprenant un liant céramique, des charges céramiques et éventuellement d'autres additifs, la formulation de barbotine comprenant
20 à 60 pourcents en poids à sec d'un liant à base d'un silicate d'un métal alcalin ;
40 à 80 pourcents en poids à sec de charges céramiques choisies dans le groupe : oxyde de zirconium stabilisé à l'oxyde d'yttrium, oxyde de magnésium, ou mélanges de ceux-ci ;
0 à 20 pourcents en poids à sec d'additifs choisis dans le groupe : phosphates d'aluminium, microsilice, métakaolin, les pourcentages en poids à sec de l'ensemble des constituants s'additionnant pour un total de 100 % ;
ainsi qu'un solvant ou un agent de mise en suspension.

2. Formulation de barbotine selon la revendication 1, **caractérisée en ce que** le solvant ou l'agent de mise en suspension est l'eau, ce pour quoi on ajoute de préférence suffisamment d'eau pour que la formulation de barbotine présente une viscosité à la température ambiante comprise dans la plage de 50 à 5000 mPa.s, de préférence de 500 à 1500 mPa.s.

3. Formulation de barbotine selon l'une des revendications précédentes, **caractérisée en ce que** le liant à base d'un silicate d'un métal alcalin présente un module compris dans la plage de 1,8 à 3,5, auquel cas il s'agit de préférence de silicate de lithium, de silicate de sodium et/ou de silicate de potassium, ayant un module compris dans la plage de 2 à 2,5.

4. Formulation de barbotine selon l'une des revendications précédentes, **caractérisée en ce que** les charges céramiques présentent une granulométrie moyenne (d50) comprise dans la plage de 0,01 à 1 µm, de préférence dans la plage de 0,05 à 0,5 µm, et que les charges présentent un coefficient de dilatation thermique compris dans la gamme des coefficients de dilatation thermique d'un substrat d'application souhaité, de préférence à la température ambiante, compris dans la plage de 10 à 15 (10E-6/K), de préférence dans la plage de 12 à 14 (10E-6/K).

5. Procédé de fabrication d'une formulation de barbotine selon l'une des revendications précédentes, **caractérisé en ce qu'**on ajoute à une solution aqueuse du liant à base d'un silicate d'un métal alcalin la charge céramique, et on la mélange à une suspension, de préférence par traitement dans un mélangeur à lame à grande vitesse de rotation, comme par exemple un Ultra-Turrax, et/ou par traitement aux ultrasons, et éventuellement on ajuste ensuite la viscosité par addition d'eau, de préférence à une viscosité de la formulation de barbotine à la température ambiante comprise dans la plage de 50 à 5000 mPa.s.

6. Procédé de création d'une zone (22) à partir d'une couche de protection thermique avec une formulation de barbotine selon l'une des revendications précédentes 1 à 4, **caractérisé en ce que** la formulation de barbotine est appliquée en 2-4 étapes d'application, chacune appliquant une couche de 0,05 à 0,3 mm, de préférence une couche de 0,1 à 0,2 mm, pour obtenir une épaisseur totale de couches de 0,4 à 1 mm, directement sur un substrat métallique, de préférence rendu rugueux, et métalliquement pur (2a/2b, 3a/3b) sans couches de liaison (19), ce à l'occasion de quoi, après chaque étape d'application, on sèche provisoirement la couche en particulier avec une soufflante à air chaud pendant un laps de temps de préférence de 1 à 5 min, de préférence à 70-80°C, puis que l'on sèche la totalité de la structure de couches pendant au moins 6 h à une température de 80 à 100°C, puis pendant au moins 15 min à une température d'au moins 400°C, et on sèche, le traitement total exigeant de préférence moins de 24 h.

7. Procédé selon la revendication 6, **caractérisé en ce que** la zone superficielle à revêtir est nettoyée avant application de la formulation de barbotine, de préférence par utilisation de brosses métalliques et/ou de liquides nettoyants, et est rendue rugueuse avec un papier émeri, le nettoyage s'effectuant de préférence sans sablage.

8. Procédé selon l'une des revendications précédentes 6 à 7, **caractérisé en ce que** la formulation de barbotine est dans chaque cas appliquée à l'aide d'une spatule, d'un rouleau, d'un pinceau et/ou d'un pistolet pulvérisateur, éventuellement avec recouvrement des zones marginales qui ne doivent pas être revêtues.

9. Procédé selon l'une des revendications précédentes 6 à 8, **caractérisé en ce que** la totalité de la structure de couches est séchée et durcie pendant au moins 6 h à une température dans la gamme de 95°C puis pendant 15 à 30 min à une température dans la gamme de 400°C.

10. Procédé selon l'une des revendications 6 à 9, **caractérisé en ce que** la totalité de la structure de couches est séchée et durcie à l'aide d'une coupole de séchage (11), appliquée sur la zone qui vient d'être revêtue, et recouvrant cette dernière pour l'essentiel complèment.

11. Procédé selon les revendications précédentes 6 à 10, **caractérisé en ce que**, pour ce qui concerne la zone, il s'agit d'un cordon de soudure (16), en particulier d'un cordon de soudure entre des demi-coques (2a/2b, 3a/3b) d'une chambre de combustion (1), et que la coupole de séchage (11) est configurée sous forme d'une boîte qui pour l'essentiel ne recouvre que la zone, ou d'un recouvrement, dont la face intérieure reçoit de l'air chaud, ou est chauffée à l'aide d'un chauffage à résistance électrique, la coupole de séchage (11) étant de préférence pourvue d'une couche isolante (29).

12. Procédé selon l'une des revendications précédentes 6 à 11, **caractérisé en ce qu'**il est mis en oeuvre pour revêtir des zones exposées au flux de gaz chauds dans une turbine à gaz, dans une turbine à gaz montée pour l'essentiel dans la zone correspondante.

13. Procédé selon les revendications précédentes 6 à 12, **caractérisé en ce qu'**il est utilisé pour revêtir le cordon de soudure entre des zones de paroi (2a/2b, 3a/3b) de la chambre de combustion, d'une manière contiguë aux couches de protection thermique (21) déjà présentes sur les zones de paroi (2a/2b, 3a/3b).

14. Procédé selon les revendications précédentes 6 à 13, **caractérisé en ce que** le revêtement (22) présente par-dessus le cordon de soudure (16) une largeur totale dans la plage de 10 à 40 mm, de préférence dans la plage de 20 à 35 mm, de préférence chaque couche de protection thermique contiguë (21) présentant un biseau (30) ayant une largeur comprise dans la plage de 2 à 10 mm.

15. Turbine à gaz comprenant une chambre de combustion (1) avec au moins une paroi de chambre de combustion formée d'éléments (2, 3) reliés par des cordons de soudure (16), au moins un cordon de soudure (16) étant directement recouvert d'une zone de couche de protection (22) fabriquée par un procédé selon les revendications 6 à 14.
